# FASCICULE DE BREVET EUROPEEN

(11) **EP 1 026 044 B1**
(45) Date de publication et mention de la délivrance du brevet: **26.06.2002**
(21) Numéro de dépôt: 00400280.4
(22) Date de dépôt: 02.02.2000
(51) Int. Cl.: B60R 16/02, H02G 15/013

(54) **Ensemble de traversée de cloison**
Anordnung einer Wanddurchführung
Assembly of a wall feedthrough

(30) Priorité: 08.02.1999 FR 9901443
(43) Date de publication de la demande: 09.08.2000
(73) Titulaire: Société SYLEA, 78190 Montigny le Bretonneux (FR)
(72) Inventeur: Chretien, Louis, 92500 Rueil Malmaison (FR); Mathey, Jean-Marc, 75014 Paris (FR); Maziere, Jean-François, 78190 Trappes (FR)
(74) Mandataire: Faber, Jean-Paul

(56) Documents cités:
- EP-A- 0 580 130
- FR-A- 2 701 517
- PATENT ABSTRACTS OF JAPAN vol. 1997, no. 9, 30 septembre 1997 (1997-09-30) & JP 09 129064 A (SUMITOMO WIRING SYST), 16 mai 1997 (1997-05-16)
- PATENT ABSTRACTS OF JAPAN vol. 1998, no. 13, 30 novembre 1998 (1998-11-30) & JP 10 213272 A (STANLEY ELECTRIC), 11 août 1998 (1998-08-11)

## Description

La présente invention vise un ensemble de traversée de cloison selon le préambule de la revendication 1. Un tel ensemble est décrit dans EP 0 580 130 A.

Il est prévu une bague destinée à être montée dans une ouverture d'une cloison séparant le compartiment moteur de l'habitacle d'un véhicule automobile et destinée au guidage d'un faisceau de câblage électrique.

L'un des buts de la présente invention est de réaliser un ensemble facile à monter et permettant d'assurer une parfaite étanchéïté entre l'habitacle et le compartiment moteur.

L'ensemble de traversée de cloisons, selon l'invention, est destiné à être monté sur des cloisons comportant une paroi métallique sur une face de laquelle est fixée une garniture, ladite paroi et ladite garniture étant percées, chacune, d'un trou s'étendant coaxialement, ledit ensemble comprenant une bague destinée à s'insérer dans les trous de la cloison et à être fixée dans les trous de celle-ci, ladite bague comportant des moyens de guidage et de réception d'un faisceau de câblage, ledit ensemble étant caractérisé en ce que la bague est en une matière souple et élastique et comporte, dans son épaisseur et s'ouvrant à une extrémité, des cavités destinées à recevoir, chacune, un insert rigide, chaque insert débordant de ladite extrémité et présentant, à son extrémité libre sur sa surface latérale, un crochet destiné à coopérer avec le bord du trou de la paroi métallique, les moyens de réception et de guidage du faisceau de câblage étant constitués par un tampon adapté à être directement surmoulé sur le faisceau de câblage et destiné à s'insérer dans la bague, des moyens étant prévus pour bloquer ledit tampon dans la bague.

On conçoit qu'un tel ensemble se monte très aisément sur une cloison.

Suivant un détail constructif, la bague comporte, à une extrémité, une lèvre périphérique destinée à coopérer avec la face libre de la garniture, tandis que sa paroi latérale présente une série de nervures destinées à porter contre la surface latérale interne du trou de la garniture et, à son autre extrémité, un rebord destiné à porter contre la face de la paroi métallique solidaire de ladite garniture.

Ainsi, les différents lèvres, nervures et rebords assurent une parfaite isolation entre le compartiment moteur et l'habitacle.

Suivant encore une variante constructive, chaque cavité présente, dans son fond, un retour, tandis que la paroi interne de la bague correspondant aux cavités s'étend jusqu'au voisinage d'une gorge interne située au voisinage de l'extrémité de la bague comportant le rebord, chaque insert présentant une partie en arc de cercle correspondant à la forme de la cavité et dont l'extrémité se termine par une saillie externe destinée à s'insérer dans le retour, la partie latérale externe de chaque insert étant pourvue d'une arête destinée à s'insérer dans la gorge. Ainsi, par un engagement des inserts dans les cavités, on assure la fixation de ceux-ci sur la bague.

Suivant une autre variante, la surface interne de chaque insert, du côté opposé à son extrémité pourvue de la saillie externe, présente une butée reliée à l'extrémité pourvue du crochet par une rampe, tandis que le tampon présente, en un point intermédiaire de sa longueur, un bourrelet destiné à coopérer avec la butée. Ainsi, la mise en place du tampon dans la bague s'effectue légèrement à force ce qui permet de vérifier le bon engagement dudit tampon.

Enfin, suivant une dernière variante, le tampon est terminé, à une extrémité, par un tore destiné à porter contre l'extrémité des inserts adjacente aux crochets. Ainsi, le tampon maintient les inserts en bloquant les crochets des inserts contre la paroi correspondante de la cloison.

L'invention va maintenant être décrite avec plus de détails en se référant à un mode de réalisation particulier donné à titre d'exemple seulement et représenté aux dessins annexés, dans lesquels :

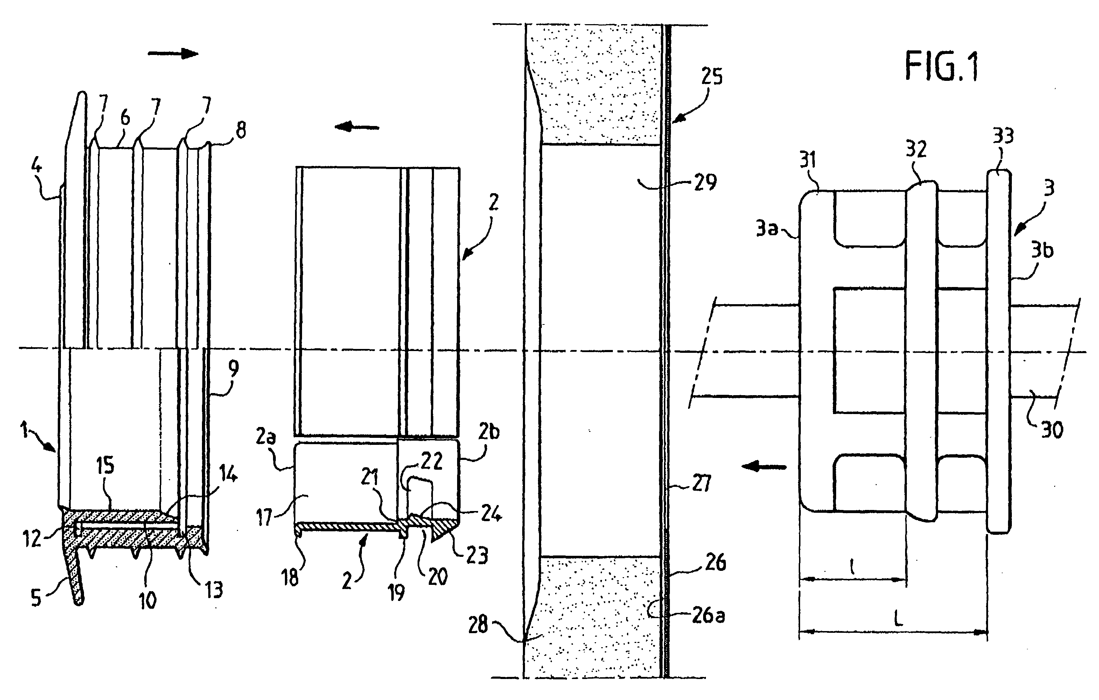

Figure 1 est une vue en élévation éclatée, partiellement en coupe montrant les différents éléments d'un ensemble de traversée de cloisons.

Figure 2 est une vue partiellement en coupe montrant le montage de la bague.

Figure 3 montre en coupe le montage complet de l'ensemble de traversée de cloisons.

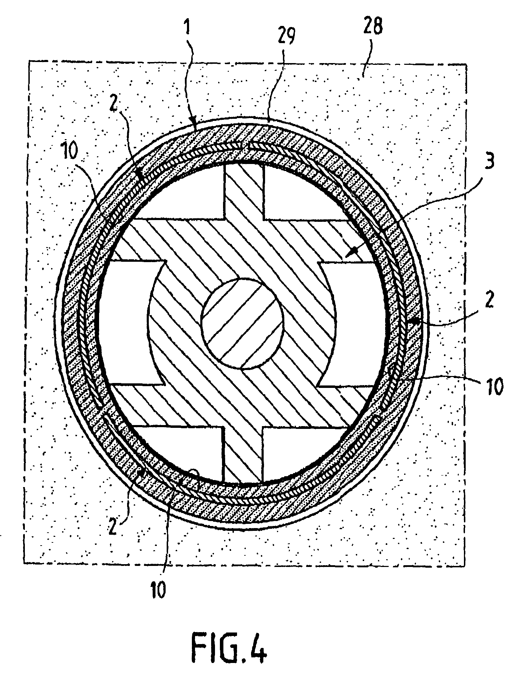

Figure 4 est une vue en coupe suivant la ligne 4-4 de la figure 3.

L'ensemble de traversée de cloisons représenté aux figures comprend une bague 1, des inserts de verrouilage 2 et un tampon de fermeture 3.

La bague 1 est réalisée en une matière souple et élastique et présente un corps sensiblement cylindrique 6 comportant, à une extrémité 4, une lèvre 5, ledit corps, à sa périphérie, étant pourvu de nervures 7, tandis que l'autre extrémité 9 se termine par un rebord 8.

Le corps 6 comporte, dans son épaisseur, ouvertes du côté de l'extrémité 9, trois cavités 10, dont le fond est pourvu d'un retour 12. La paroi interne 15 du corps 6 correspondant aux cavités 10 s'étend jusqu'au voisinage d'une gorge 13 de la surface interne dudit corps 6 et se termine par une partie qui va en s'évasant vers l'extrémité 9.

Dans chaque cavité 10 s'insère un insert rigide 2 qui présente une partie 17 en arc de cercle correspondant à la forme de la cavité et dont l'extrémité libre 2a se termine par une saillie externe 18 destinée à s'insérer dans le retour 12. A sa surface latérale, l'insert 2 présente une arête 19 destinée à se loger dans la gorge 13 et une cavité 20 terminée par un crochet 23 à son extrémité 2b. Au droit de l'arête 19, il est prévu, sur la paroi interne de l'insert, une première butée 21, une seconde butée 22 étant située sur ladite paroi interne sensiblement au droit de la cavité 20 et reliée à l'extrémité libre par une rampe 24.

La référence 25 désigne une cloison séparant, dans un véhicule automobile, l'habitacle du compartiment moteur, cette cloison comportant une paroi métallique 26 percée d'un trou circulaire 27 et sur une face 26a de laquelle est fixée une garniture 28 destinée à une isolation thermique et acoustique, cette garniture présentant un trou 29 coaxial au trou 27.

Le tampon 3 est réalisé en une matière plastique de préférence souple ou semi-rigide et est directement surmoulé sur un faisceau de câblage 30, ledit tampon 3 présentant un corps sensiblement cylindrique 31 qui s'étend depuis une extrémité 3a jusqu'à un bourrelet 32, l'autre extrémité 3b étant bordée par un tore 33.

La distance "1" séparant l'extrémité 3a du bourrelet 32 correspond à la longueur de la paroi 15, tandis que la distance "L" comprise entre l'extrémité 3a et le tore 33 correspond à la longueur comprise entre l'extrémité 4 et les extrémités 2b.

L'ensemble de traversée de cloisons se pose de la manière suivante :

On met en place dans chaque cavité 10 un insert 2 de manière que la saillie 18 s'engage dans le retour 12 et que l'arête 19 s'emboîte dans la gorge 13, la partie 14 venant porter contre la première butée 21. Les deux pièces étant ainsi assemblées elles sont engagées dans le trou 29 dont les dimensions correspondent au diamètre du corps 6 afin que les nervures 7 soient légèrement comprimées, la lèvre 5 venant épouser la face libre de la garniture 28.

Le trou 27 a un diamètre légèrement inférieur à celui du trou 29 de sorte que les crochets 23, en coopérant par leur pointe avec le bord du trou 27, engendre une légère déformation élastique du corps 6, jusqu'à ce que le bord dudit trou 27 s'insère dans les cavités 20. Dans cette position, la bague 1 1 est fixée à la cloison et le rebord 8 porte contre la face 26a de la paroi 26 pour assurer l'étanchéité.

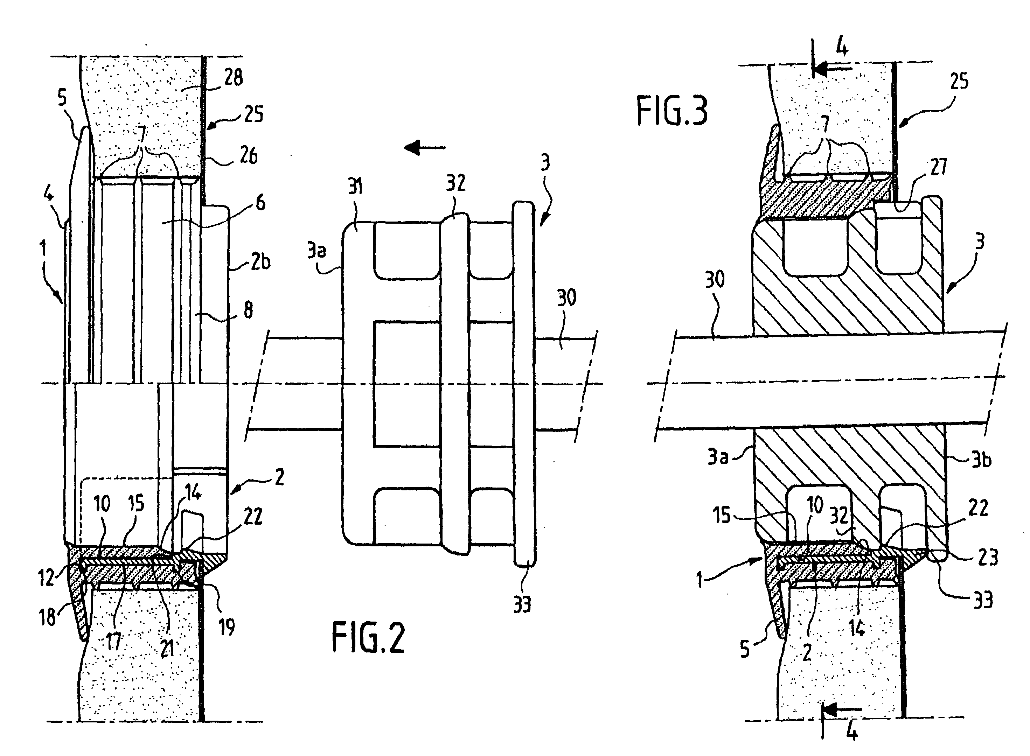

On pose ensuite le tampon 3 qui a préalablement été surmoulé sur le câblage 30. Le tampon 3 est engagé du côté de la paroi 26 et est poussé jusqu'à ce que le tore 33 vienne porter contre l'extrémité 2b (voir figure 3). Dans cette position, le bourrelet 32 vient coopérer avec la partie 14 pour assurer l'étanchéité entre la bague 1 et le tampon 3, ledit bourrelet 32 portant contre la seconde butée 22 des inserts 2 après avoir franchi la rampe 24 de sorte que les crochets 23 se trouvent bloqués et qu'ainsi l'ensemble de traversée de cloisons se trouve parfaitement assujetti à ladite cloison 25.

Dans le mode de réalisation représenté, il est prévu un seul faisceau de câblage qui traverse le tampon 3 dans sa partie centrale, on pourrait prévoir plusieurs faisceaux sur lesquels le tampon serait surmoulé, ceux-ci étant disposés, par exemple, au voisinage de sa périphérie.

Bien entendu, l'invention n'est pas limitée au mode de réalisation qui vient d'être décrit et représenté. On pourra y apporter de nombreuses modifications de détail sans sortir pour cela du cadre de l'invention.

## Revendications

1. Ensemble de traversée de cloisons, qui est destiné à être monté sur des cloisons comportant une paroi métallique (26) sur une face de laquelle est fixée une garniture (28), ladite paroi et ladite garniture étant percées, chacune, d'un trou (27,29) s'étendant coaxialement, ledit ensemble comprenant une bague (1) destinée à s'insérer dans les trous (27, 29) de la cloison et à être fixée dans les trous (27, 29) de celle-ci, ladite bague (1) comportant des moyens de guidage et de réception d'un faisceau de câblage (30), **caractérisé en ce que** la bague (1) est en une matière souple et élastique et comporte, dans son épaisseur et s'ouvrant à une extrémité (9), des cavités (10) destinées à recevoir, chacune, un insert rigide (2), chaque insert (2) débordant de ladite extrémité (9) et présentant, à son extrémité libre sur sa surface latérale, un crochet (23) destiné à coopérer avec le bord du trou (27) de la paroi métallique (26), les moyens de réception et de guidage du faisceau de câblage (30) étant constitués par un tampon (3) adapté à être directement surmoulé sur le faisceau de câblage et destiné à s'insérer dans la bague (1), des moyens étant prévus pour bloquer ledit tampon (3) dans la bague (1).

2. Ensemble de traversée de cloisons, selon la revendication 1, **caractérisé en ce que** la bague (1) comporte, à une extrémité (4), une lèvre périphérique (5) destinée à coopérer avec la face libre de la garniture (28), tandis que sa paroi latérale (6) présente une série de nervures (7) destinées à porter contre la surface latérale interne du trou (29) de la garniture et à son autre extrémité un rebord (8) destiné à porter contre la face de la paroi métallique solidaire de ladite garniture (28).

3. Ensemble de traversée de cloisons, selon la revendication 1, **caractérisé en ce que** chaque cavité (10), présente, dans son fond, un retour (12), tandis que la paroi interne (15) de la bague (1) correspondant aux cavités (10) s'étend jusqu'au voisinage d'une gorge interne (13) située au voisinage de l'extrémité (9) de la bague (1) comportant le rebord (8), chaque insert (2) présentant une partie en arc cercle (17) correspondant à la forme de la cavité et dont l'extrémité (2a) se termine par une saillie externe (18) destinée à s'insérer dans le retour (12), la partie latérale externe de chaque insert étant pourvue d'une arête (19) destinée à s'insérer dans la gorge (13).

4. Ensemble de traversée de cloisons, selon la revendication 1 ou 3, **caractérisé en ce que** la surface interne de chaque insert (2), du côté opposé à son extrémité (2a) pourvue de la saillie externe (18) présente une butée (22) reliée à l'extrémité pourvue du crochet (23) par une rampe (24), tandis que le tampon (3) présente, en un point intermédiaire de sa longueur, un bourrelet (32) destiné à coopérer avec la butée (22).

5. Ensemble de traversée de cloisons, selon l'une des revendications 1, 3 ou 4, **caractérisé en ce que** le tampon (3) est terminé, à une extrémité (3b), par un tore (33) destiné à porter contre l'extrémité des inserts (2) adjacente aux crochets (23).

## Claims

1. A partition feedthrough assembly, which is intended to be mounted on partitions, comprising a metal wall (26) onto one face of which a lining (28) is fixed, the said wall and the said lining each being pierced by a hole (27, 29) extending coaxially, the said assembly comprising a ring (1) intended to be inserted into the holes (27, 29) of the partition and to be fixed in the holes (27, 29) in said partition, the said ring (1) comprising means for guiding and receiving a cable set (30),
**characterised in that** the ring (1) is made from a flexible, elastic material and comprises, in its thickness and opening at one end (9), cavities (10) each intended to receive a rigid insert (20), each insert (2) protruding from the said end (9) and having, at its free end on its lateral surface, a hook (23) intended to cooperate with the edge of the hole (27) of the metal wall (26), the means for receiving and guiding the cable set (30) being formed by a stopper (3) suitable for being directly moulded onto the cable set and intended to be inserted into the ring (1), means being provided to lock the said stopper (3) in the ring (1).

2. A partition feedthrough assembly according to Claim 1,
**characterised in that** the ring (1) comprises, at one end (4), a peripheral lip (5) intended to cooperate with the free edge of the lining (28), whereas its lateral wall (6) has a series of ribs (7) intended to bear against the lateral internal surface of the hole (29) of the lining and at its other end a shoulder (8) intended to bear against the face of the metal wall joined to the said lining (28).

3. A partition feedthrough assembly according to Claim 1,
**characterised in that** each cavity (10) has a bend (12) in its base, whereas the internal wall (15) of the ring (1) corresponding to the cavities (10) extends right to the vicinity of an internal groove (13) situated in the vicinity of the end (9) of the ring (1) comprising the shoulder (8), each insert (2) having a part shaped like the arc of a circle (17) corresponding to the shape of the cavity and the end (2a) of which ends in an external projection (18) intended to be inserted into the bend (12), the external lateral part of each insert being provided with a fin (19) intended to be inserted into the groove (13).

4. A partition feedthrough assembly according to Claim 1 or 3,
**characterised in that** the internal surface of each insert (2), on the side opposite its end (2a) provided with the external projection (18), has a stop (22) joined by a ramp (24) to the end provided with the hook (23), whereas the stopper (3) has, at an intermediate point of its length, a bead (32) intended to cooperate with the stop (22).

5. A partition feedthrough assembly according to one of Claims 1, 3 or 4,
**characterised in that** the stopper (3) ends, at one end (3b), in a torus (33) intended to bear against the end of the inserts (2) which is adjacent to the hooks (23).

## Patentansprüche

1. Anordnung zur Wanddurchführung, die zur Anbringung an Zwischenwänden vorgesehen ist, die eine metallische Wandung (26) aufweisen, auf deren einer Seite eine Garnitur (28) befestigt ist, wobei die genannte Wandung und die genannte Garnitur jede durch eine Öffnung (27, 29) durchzogen sind, die sich koaxial erstrecken, die genannte Anordnung einen Ring (1) aufweist, der dazu vorgesehen ist, in die Öffnungen (27, 29) der Wandung eingesetzt und in deren Öffnungen (27, 29) befestigt zu werden, wobei genannter Ring (1) Mittel zur Führung und Aufnahme eines Kabelbündels (30) aufweist, **dadurch gekennzeichnet, dass** der Ring (1) aus einem schmiegsamen und elastischen Material besteht und innerhalb seiner Dickenabmessung Hohlräume (10), die sich zu einem Ende (9) hin öffnen, aufweist, die jeder zur Aufnahme eines starren Einsatzes (2) vorgesehen sind, wobei jeder Einsatz (2) über das genannte Ende (9) vorsteht und an seinem freien Ende an seiner seitlichen Oberfläche einen Haken (23) aufweist, der zur Zusammenwirkung mit dem Rand der Öffnung (27) der metallischen Wandung (26) vorgesehen ist, die Mittel für die Aufnahme und die Führung des Kabelbündels (30) durch einen Stopfen (3) gebildet sind, der dazu eingerichtet ist, dem Kabelbündel unmittelbar aufgeformt zu werden, und der zum Eingriff in den Ring (1) bestimmt ist, wobei Mittel vorgesehen sind, um den genannten Stopfen (3) in dem Ring (1) festzulegen.

2. Anordnung zur Wanddurchführung nach Anspruch 1, **dadurch gekennzeichnet, dass** der Ring (1) an einem Ende (4) eine umfängliche Lippe (5) aufweist, die für die Zusammenwirkung mit der freien Seite der Garnitur (28) vorgesehen ist, und dass seine Seitenwand (6) eine Reihe von Rippen (7), die dazu bestimmt sind, sich gegen die innere Seitenfläche der Öffnung (29) der Garnitur abzustützen, und an seinem anderen Ende eine Randleiste (8) aufweist, die dazu bestimmt ist, sich an der Seite der metallischen Wandung abzustützen, an der die genannte Garnitur (28) befestigt ist.

3. Anordnung zur Wanddurchführung nach Anspruch 1, **dadurch gekennzeichnet, dass** jeder Hohlraum (10) an seinem Grund eine Hinterschneidung (12) aufweist und dass die Innenwand (15) des Ringes (1) in Entsprechung zu den Hohlräumen (10) sich bis in die Nähe einer inneren Kehle (13) erstreckt, die in der Nähe des Endes (9) des Ringes (1) gelegen ist, das die Randleiste (8) aufweist, wobei der Einsatz (2) einen kreisbogenformigen Teil (17) aufweist, der der Form des Hohlraumes entspricht und dessen Ende (2a) in einem äußeren Vorsprung (18) endigt, der für den Eingriff in die Hinterschneidung (12) bestimmt ist, wobei der äußere Seitenteil jedes Einsatzes mit einer Kante (19) versehen ist, die zum Eingriff in die Kehle (13) bestimmt ist.

4. Anordnung zur Wanddurchführung nach Anspruch 1 oder 3, **dadurch gekennzeichnet, dass** die Innenfläche jedes Einsatzes (2) auf der Seite, die dem mit dem äußeren Vorsprung (18) versehenen Ende (2a) entgegengesetzt ist, einen Anschlag (22) aufweist, der mit dem mit dem Haken (23) versehenen Ende über eine Rampe (24) verbunden ist, und dass der Stopfen (3) an einer innerhalb seiner Länge gelegenen Stelle einen Wulst (32) aufweist, der für die Zusammenwirkung mit dem Anschlag (22) bestimmt ist.

5. Anordnung zur Wanddurchführung nach einem der Ansprüche 1, 3 oder 4, **dadurch gekennzeichnet, dass** der Stopfen (3) an einem Ende (3b) in einem Torus (33) endigt, der dazu bestimmt ist, sich gegen das Ende der Einsätze (2), an die Haken (23) angrenzend, abzustützen.
